# EUROPEAN PATENT SPECIFICATION

(11) **EP 1 493 933 B1**
(45) Date of publication and mention of the grant of the patent: **05.04.2006**
(21) Application number: 04015120.1
(22) Date of filing: 28.06.2004
(51) Int. Cl.: F16C 1/12

(54) **A connection device for an end of a control cable**
Verbindungsvorrichtung für ein Steuerkabelende
Dispositif de connection pour l'extrémité d'un câble de commande

(30) Priority: 30.06.2003 IT to20030496
(43) Date of publication of application: 05.01.2005
(73) Proprietor: Sila Holding Industriale S.p.A., 10042 Nichelino(Torino) (IT)
(72) Inventor: Tancredi, Angelo, 10137 Torino (IT); Melis, Salvatore, 10098 Rivoli (Torino) (IT)
(74) Representative: Rondano, Davide

(56) References cited:
- EP-A- 0 940 591
- DE-A- 19 813 721
- DE-A- 19 918 911
- US-A- 4 348 348

## Description

The present invention relates to a connection device for an end of a control cable of a so-called push-pull type. These devices are commonly used, in particular in the automotive field, for connecting one end of a control cable to a control member, such as the gearshift lever of a motor-vehicle gearbox, for example.

The connection device must provide an articulated connection between the end of the cable and the control member. To this end the device, which is generally fitted on the control member, for example onto an end of the gearshift lever, has a spherical seat into which the ball head of a pin fixed to an end of the control cable is to be snap engaged. In this way, a releasable connection between the cable and the control member is obtained.

German Patent Application DE 198 13 721 A1, for example, describes a terminal device designed to reduce the force required to insert the ball head of the pin associated with the control lever into the spherical seat formed in the cable terminal, without at the same time reducing the disassembly force and thereby risking the ball head becoming disengaged from its seat during operation. To this end, this known device includes:
an outer body connected to the control cable by a connection rod and having an aperture arranged perpendicular to the rod;
a pin with a ball head fitted onto the end of the control lever;
a sleeve inserted through the aperture of the outer body and having at least two first cavities and two second cavities defining a first, pre-assembly position and a second, assembly position, respectively;
a bush mounted slidably in the sleeve and having a spherical seat for receiving the ball head of the pin;
in which the bush is provided with resilient retaining teeth for engaging in the cavities of the sleeve for locking the bush into the said two positions within the cavity in the terminal body.

With the bush in the first position (pre-assembly) the spherical seat can enlarge, due to the presence of slits, in order to snap engage the ball head of the pin. Upon displacing the bush into the second position (assembly), the entire portion of the bush forming the spherical seat is contained within the sleeve inside the terminal body and thus cannot enlarge to allow the ball head to disengage from its seat.

According to this known arrangement, in order to disconnect the end of the cable it is necessary to act on the resilient retaining teeth of the bush, preferably using a special tool, in order to disengage them from the cavities defining the assembly position in the sleeve.

The object of the present invention is to provide an end connection device for a control cable which overcomes the disadvantage of the prior art discussed above, making it possible to disconnect the bush from the sleeve easily, without the need for tools or instruments additional to the device.

This and other objects are achieved according to the invention by a cable end connection device having the characteristics defined in Claim 1.

Further characteristics and advantages of the device of the invention will become apparent from the detailed description which follows, given purely by way of non-limitative example with reference to the appended drawings, in which:
Figure 1 is a perspective view of a cable end connection device according to the invention, in its assembled condition;
Figure 2 is a similar view to that of Figure 1, showing the device without its upper closure cover;
Figures 3 and 4 are perspective views of an outer body and a bush, respectively, which form part of the device of Figure 1;
Figure 5 is a perspective view of an upper closure cover for the device of Figure 1;
Figure 6 is a perspective view of a variant of construction of an upper closure cover for the device of Figure 1;
Figure 7 is a perspective view of a cable end connection device according to a further embodiment of the invention, in its assembled condition and without the closure cover;
Figure 8 is a perspective view of an upper closure cover for the device of Figure 7; and
Figure 9 is a perspective view of an outer body forming part of the device of Figure 7.

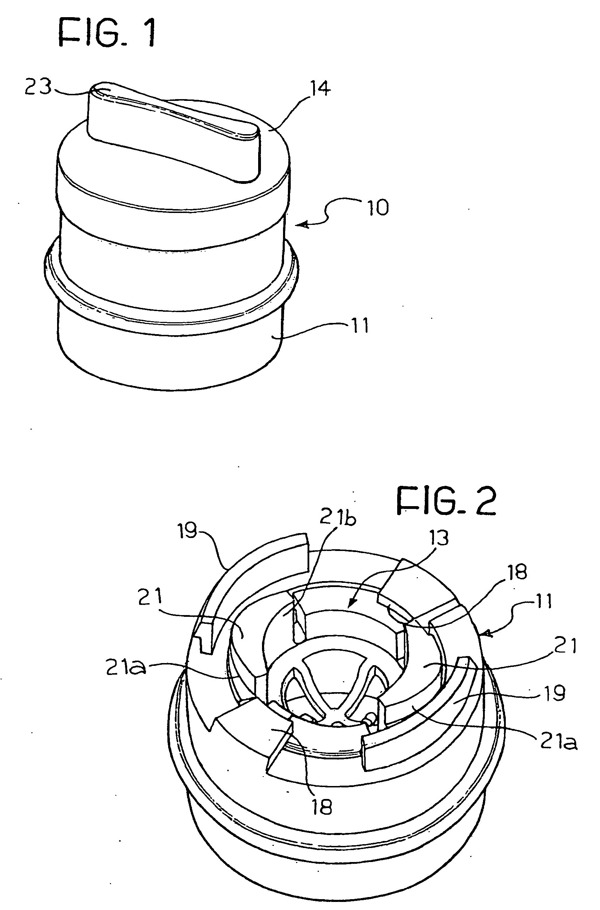

With reference first to Figures 1 to 6, a cable end connection device according to the present invention is generally indicated 10. The device 10 includes an outer body 11, designed to be connected in a manner known per se, such as for example by means of a connection rod (not shown) to an end of a control cable (also not shown). The body 11 has a central through aperture 12, open at one (lower) end for insertion of a bush 13 and closed at the opposite (upper) end by a cover 14. Advantageously, though not necessarily, the body 11 is co-moulded with the connection rod, which is usually made of metal and arranged perpendicular to the axis of the aperture 12.

Advantageously the body 11 and the bush 13 are of the type described in the European Patent Application 04011348.2 in the name of the Applicant. These components will therefore not be described in detail here, only those portions which are strictly relevant to the present invention will be illustrated.

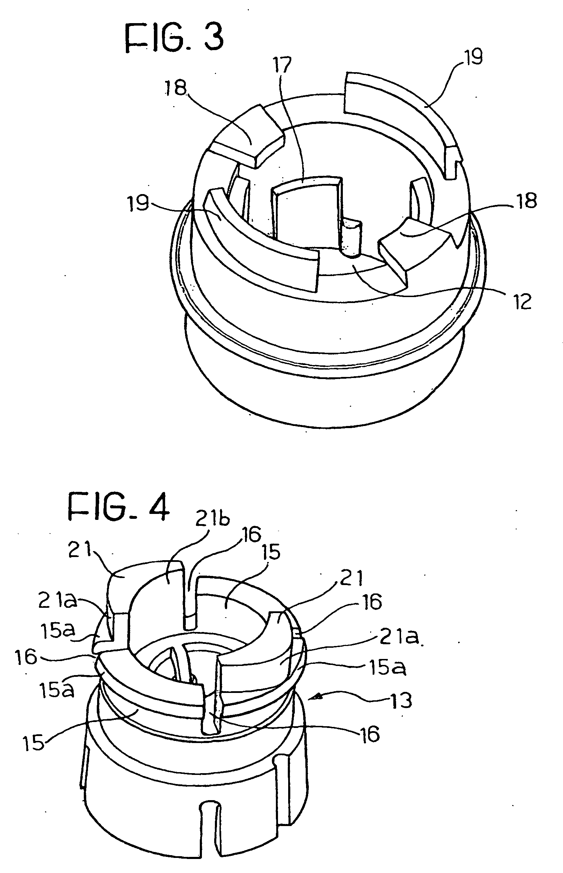

At the top, the bush 13 forms a resiliently deformable portion 15, subdivided by a plurality of axial slots 16 (four in the example illustrated) into a corresponding plurality of resiliently deformable limbs, provided with outwardly radial protuberances 15a operable to snap engage respective ramp-like projections 17 (only one of which is shown in Figure 3) provided on the inner surface of the through aperture 12 of the body 11, so as to lock the bush 13 in its assembled position. Clearly, the slots 16 have the function to divide the upper portion of the bush 13 into resiliently deformable limbs, thereby facilitating the snap engagement of the protuberances 15a with the projections 17. In this way, when the bush is pressed upwards though the aperture 12, the deformable limbs of the upper portion of the bush bend radially inwards as a result of the protuberance 15a sliding on the ramp surface of the projections 17 on the body 11, until the protuberance moves beyond these projections. In this position, the bush 13 is locked axially against downward movement in the aperture 12, thus ensuring that the device remains in its assembled condition.

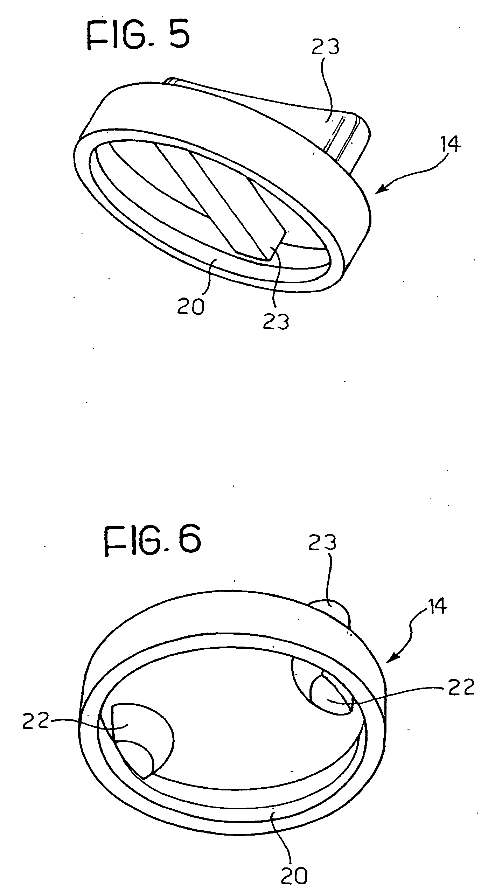

The body 11 also forms a pair of radial projections 18, extending radially inwards from the upper rim of the aperture 12 so as to define, in cooperation with the protuberances 15a, an upper travel limit position for the bush 13, corresponding to the assembled position described above. There are provided also a pair of detent portions 19 which extend vertically from the top of the body 11 and are designed to secure the cover 14 to the body 11, cooperating resiliently with a raised circumferential rim 20 formed on the cover (Figures 5 and 6). The snap engagement between the cover 14 and the body 11 by means of the detents 19, though locking the cover axially, allows it to rotate relative to the body about the axis of the aperture 12 for disassembling the device, as will be explained later.

The bush 13 also forms a pair of cam portions 21 extending vertically from the top of a pair of opposite sectors of the radial protuberance 15a. Each cam portion 21 is defined radially between an outer surface 21a having a profile shaped approximately as a limb of a hyperbola and an inner surface 21b with a profile forming an arc of a circle continuous with that of a corresponding sector of radial protuberance 15a, and is delimited circumferentially by a pair of adjacent slots 16. The outer surface 21a of each of the cam portions 21 is arranged to cooperate with a corresponding retaining member 22 formed by the cover 14 in such a way that, upon rotation of the cover about an axis of rotation substantially coinciding with the axis of the aperture 12, the member 22 causes the cam portions 21 to be deflected resiliently in an axially inward direction. As a result of this resilient deformation, the radial protuberance 15a, which is formed in one piece with the cam portions 21, disengages from the projections 17 defining the assembly position of the device and thus allows the bush 13 to be extracted from the body 11.

The retaining member 22 of the cover 14 can be formed as a single bar-shaped element which extends diametrally (Figure 5) and can act simultaneously with its two ends on both the cam portions 21. Alternatively, a pair of retaining members 22 can be provided (Figure 6), formed in the shape of half discs, for example, and arranged on diametrically opposite sides so as to act simultaneously on the pair of cam portions 21.

In this way, clearly, it is no longer necessary to use a specific additional tool or instruments in order to disassemble the device, but it is sufficient to rotate the cover 14 about its own axis. In order to facilitate rotation of the cover 14 in order to disassemble the device, the top of the cover forms a grip portion 23 on which an operator can act easily.

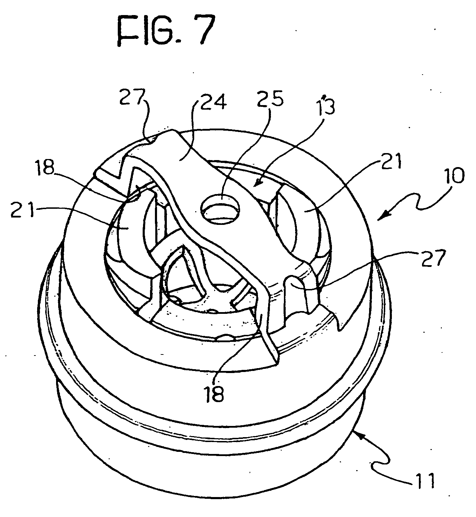

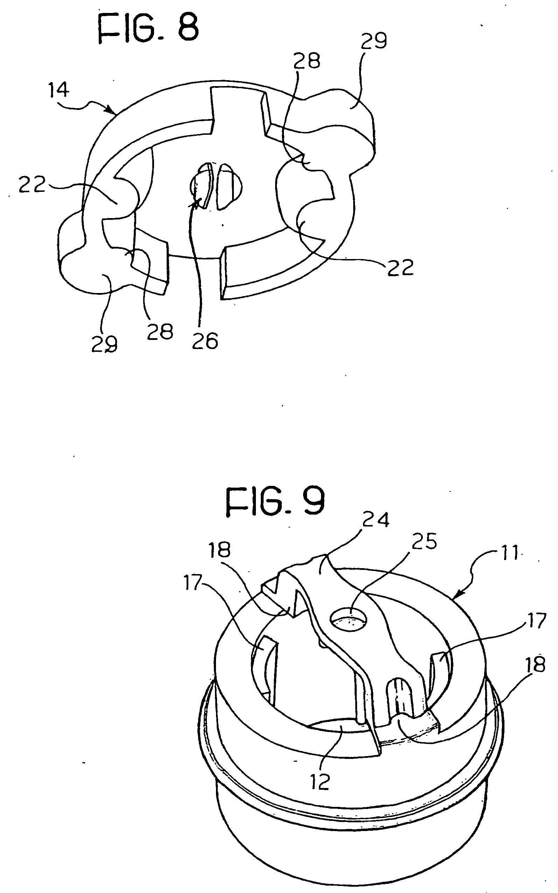

A second embodiment of a device according to the present invention is shown in Figures 7 to 9, in which parts and elements identical or corresponding to those in the preceding figures have been given the same reference numbers.

With reference to these figures, the body 11 of the device is provided at its top with a bridge portion 24 which extends between the two diametrically opposite radial projections 18 of the body 11 and acts as a support for the cover 14. This portion 24 has a central hole 25 for a clip member for the cover 14, constituted by a pair of substantially semi-conical snap engagement teeth 26 which project downwardly from the centre of the cover. The portion 24 has a pair of semi-cylindrical notches 27 at its diametrically opposite ends for receiving corresponding semi-cylindrical radial projections 28 formed by the cover 14 in order to ensure that the cover is correctly centred on the body of the device. As in the case of the preceding embodiment, in order to allow the radial protuberance 15a on the bush 13 to disengage from the projections 17 on the body 11, the bush 13 forms at its top a pair of cam portions 21, substantially similar to those described above, designed to cooperate with a pair of retaining members 22 on the cover 14, like those of Figure 6, which extend radially inwardly and are offset angularly with respect to the centering projections 28.

In order to facilitate rotation of the cover 14, this latter is also provided with a pair of grip members 29 in the shape of handles projecting radially outwardly and aligned with the centering projections 28.

The operating principle of this second embodiment of the device is similar to that of the first embodiment described above. The only difference is that now the cover 14 is secured to the body 11 by virtue of the engagement of the snap-engagement teeth 26 on the cover in the hole 25 in the bridge portion 24 of the body. In this case as well, anyway, the means for securing the two components (cover and body) define the axis of rotation of the cover relative to the body.

## Claims

1. A connection device, for connecting one end of a control cable to a control member, in particular to a gearshift lever of a motor vehicle gearbox; the device comprising
an outer body (11) connectable to the control cable and having a through aperture (12);
a bush (13) insertable into the through aperture (12) in the body (11) to be releasably locked in an assembly position; and
a cover (14) for closing the through aperture (12) on the side axially opposite that through which the bush (13) is insertable;
wherein the bush (13) is provided with resilient engagement means (15, 15a) able to cooperate with respective retaining members (17) of the body (11) so as releasably to lock the bush (13) in the assembly position;
**characterised in that**
the bush (13) is provided also with cam portions (21) formed in one piece with the resilient engagement means (15, 15a) ;
the cover (14) is secured to the body (11) for rotation about an axis of rotation which substantially coincides with the axis of the aperture (12);
the cover (14) is provided with retaining means (22) arranged to cooperate with the cam portions (21) of the bush (13) in such a way that, upon rotation of the cover about the said axis of rotation, the retaining means (22) cause the cam portions (21), as well as the engagement means (15, 15a) of the bush (13), to be resiliently deflected, thus causing these latter to disengage from the retaining members (17) of the body (11) and allowing the bush (13) to be removed from the body (11).

2. A device according to Claim 1, **characterised in that** the body (11) and the cover (14) are also provided with respective clip means (19, 20; 24, 25, 26) for securing the cover (14) to the body (11) in such a way as to allow the cover (14) to be rotated about the said axis of rotation.

3. A device according to Claim 2, **characterised in that** the said clip means for securing the cover (14) to the body (11) include detents (19) extending vertically from the end of the body (11) facing the cover (14) and a relieved circumferential rim (20) formed by the cover (14) and snap-engageable by the detents (19).

4. A device according to Claim 2, **characterised in that** the said clip means for securing the cover (14) to the body (11) include stop teeth (26) projecting from the centre of the cover (14) and a bridge portion (24) formed in one piece with the body (11) and extending diametrally from the end of the body (11) facing the cover (14), the said bridge portion (24) having a central hole (25) into which the stop teeth (26) are engageable.

5. A device according to Claim 1, of a type in which the resilient engagement means (15, 15a) of the bush (13) are constituted by a plurality of resiliently deformable limbs (15) forming outwardly radial protuberances (15a), **characterised in that** the said cam portions (21) on the bush (13) extend upwardly from a pair of diametrically opposite limbs (15).

6. A device according to Claim 5, **characterised in that** the said retaining means (22) of the cover (14) are formed by a bar-shaped element extending diametrally and operable to act simultaneously with its two ends on a pair of cam portions (21) .

7. A device according to Claim 5, **characterised in that** the said retaining members (22) of the cover (14) are formed by a pair of half-disc elements arranged on diametrically opposite sides so as to act simultaneously on a pair of cam portions (21) .

8. A device according to any of the preceding Claims, **characterised in that** the cover (14) is provided with grip means (23, 29) on which an operator can act in order to rotate the cover.

## Patentansprüche

1. Verbindungsvorrichtung zum Verbinden eines Endes eines Steuerkabels mit einem Steuerglied, insbesondere mit einem Schalthebel eines Kraftfahrzeuggetriebes, wobei die Vorrichtung Folgendes umfasst:
einen Außenkörper (11), der mit dem Steuerkabel verbindbar ist und eine durchgehende Öffnung (12) aufweist;
eine Buchse (13), die in der durchgehenden Öffnung (12) im Körper (11) einsetzbar ist, um lösbar in einer Einbauposition eingerastet zu werden; und
eine Abdeckung (14) zum Verschließen der durchgehenden Öffnung (12) auf der Seite, die jener axial gegenüberliegt, durch welche die Buchse (13) einsetzbar ist;
wobei die Buchse (13) mit elastischen Eingriffsmitteln (15, 15a) ausgestattet ist, die in der Lage sind, mit entsprechenden Haltegliedern (17) des Körpers (11) zusammenzuwirken, um die Buchse (13) lösbar in der Einbauposition einzurasten;
**dadurch gekennzeichnet, dass**
die Buchse (13) auch mit Nockenteilen (21) ausgestattet ist, die mit den elastischen Eingriffsmitteln (15, 15a) in einem Stück gebildet sind;
die Abdeckung (14) zur Drehung um eine Drehachse, die im Wesentlichen mit der Achse der Öffnung (12) zusammenfällt, am Körper (11) befestigt ist;
die Abdeckung (14) mit Haltemitteln (22) ausgestattet ist, die dazu eingerichtet sind, mit den Nockenteilen (21) der Buchse (13) solcherart zusammenzuwirken, dass die Haltemittel (22) bei einer Drehung der Abdeckung um die Drehachse die Nockenteile (21) sowie die Eingriffsmittel (15, 15a) der Buchse (13) dazu bringen, elastisch abgelenkt zu werden, wodurch bewirkt wird, dass sich letztere von den Haltegliedern (17) des Körpers (11) lösen, und eine Entfernung der Buchse (13) vom Körper (11) ermöglicht wird.

2. Vorrichtung gemäß Anspruch 1, **dadurch gekennzeichnet, dass** der Körper (11) und die Abdeckung (14) ebenso mit entsprechenden Klemmmitteln (19, 20; 24, 25, 26) ausgestattet sind, um die Abdeckung (14) solcherart am Körper (11) zu befestigen, dass eine Drehung der Abdeckung (14) um die Drehachse ermöglicht wird.

3. Vorrichtung gemäß Anspruch 2, **dadurch gekennzeichnet, dass** die Klemmmittel zum Befestigen der Abdeckung (14) am Körper (11) Sperren (19) umfassen, die sich von dem der Abdeckung (14) zugewandten Ende des Körpers (11) vertikal erstrecken, sowie einen durch die Abdeckung (14) gebildeten ausgesparten Umfangsrand (20), der von den Sperren (19) einrastend in Eingriff genommen werden kann.

4. Vorrichtung gemäß Anspruch 2, **dadurch gekennzeichnet, dass** die Klemmmittel zum Befestigen der Abdeckung (14) am Körper (11) Anschlagzähne (26) umfassen, die aus der Mitte der Abdeckung (14) hervorragen, sowie einen Brückenteil (24), der mit dem Körper (11) in einem Stück gebildet ist und sich von dem der Abdeckung (14) zugewandten Ende des Körpers (11) diametral erstreckt, wobei der Brückenteil (24) ein zentrales Loch (25) aufweist, in das die Anschlagzähne (26) eingreifen können.

5. Vorrichtung gemäß Anspruch 1, die einem Typ angehört, bei dem die elastischen Eingriffsmittel (15, 15a) der Buchse (13) durch eine Mehrzahl von elastisch verformbaren Gliedern (15) gebildet sind, welche außen radiale Ausstülpungen (15a) bilden, **dadurch gekennzeichnet, dass** sich die Nockenteile (21) an der Buchse (13) von einem Paar diametral gegenüberliegender Glieder (15) nach oben erstrecken.

6. Vorrichtung gemäß Anspruch 5, **dadurch gekennzeichnet, dass** die Haltemittel (22) der Abdeckung (14) durch ein riegelförmiges Element gebildet sind, das sich diametral erstreckt und dazu betriebsfähig ist, mit seinen zwei Enden gleichzeitig auf ein Paar von Nockenteilen (21) einzuwirken.

7. Vorrichtung gemäß Anspruch 5, **dadurch gekennzeichnet, dass** die Halteglieder (22) der Abdeckung (14) durch ein Paar von Halbscheibenelementen gebildet sind, die auf diametral gegenüberliegenden Seiten angeordnet sind, um gleichzeitig auf ein Paar von Nockenteilen (21) einzuwirken.

8. Vorrichtung gemäß einem der vorhergehenden Ansprüche, **dadurch gekennzeichnet, dass** die Abdeckung (14) mit Griffmitteln (23, 29) ausgestattet ist, auf die ein Bediener einwirken kann, um die Abdeckung zu drehen.

## Revendications

1. Dispositif de raccordement pour raccorder une extrémité d'un câble de commande à un élément de commande, en particulier un levier de vitesses d'une boîte de vitesses d'un véhicule à moteur; le dispositif comprenant
un corps externe (11) pouvant être raccordé au câble de commande et ayant une ouverture débouchante (12) ;
une douille (13) pouvant être insérée dans l'ouverture débouchante (12) dans le corps (11) pour être bloquée de manière amovible dans une position d'assemblage ; et
un couvercle (14) pour fermer l'ouverture débouchante (12) sur le côté axialement opposé à celui à travers lequel la douille (13) peut être insérée ;
dans lequel la douille (13) est prévue avec des moyens de mise en prise élastiques (15, 15a) capables de coopérer avec des moyens de retenue (17) respectifs du corps (11) afin de bloquer de manière amovible la douille (13) dans la position d'assemblage ;
**caractérisé en ce que**
la douille (13) est également prévue avec des parties de came (21) formées d'un seul tenant avec les moyens de mise en prise élastiques (15, 15a) ;
le couvercle (14) est fixé sur le corps (11) pour la rotation autour d'un axe de rotation qui coïncide sensiblement avec l'axe de l'ouverture (12) ;
le couvercle (14) est prévu avec des moyens de retenue (22) agencé pour coopérer avec les parties de came (21) de la douille (13) de sorte que suite à la rotation du couvercle autour dudit axe de rotation, les moyens de retenue (22) provoquent la déflexion élastique des parties de came (21) ainsi que des moyens de mise en prise (15, 15a) de la douille (13), provoquant ainsi le dégagement de ces derniers des éléments de retenue (17) du corps (11) et permettant à la douille (13) d'être retirée du corps (11).

2. Dispositif selon la revendication 1, **caractérisé en ce que** le corps (11) et le couvercle (14) sont également prévus avec des moyens d'accrochage (19, 20 ; 24, 25, 26) respectifs pour fixer le couvercle (14) sur le corps (11) afin de permettre au couvercle (14) d'être entraîné en rotation autour dudit axe de rotation.

3. Dispositif selon la revendication 2, **caractérisé en ce que** lesdits moyens d'accrochage pour fixer le couvercle (14) sur le corps (11) comprennent des encliquetages (19) s'étendant verticalement à partir de l'extrémité du corps (11) faisant face au couvercle (14) et un bord circonférentiel en relief (20) formé par le couvercle (14) et pouvant être mis en prise par pression par les encliquetages (19).

4. Dispositif selon la revendication 2, **caractérisé en ce que** lesdits moyens d'accrochage pour fixer le couvercle (14) sur le corps (11) comprennent des dents d'arrêt (26) faisant saillie à partir du centre du couvercle (14) et une partie de pont (24) formée d'un seul tenant avec le corps (11) et s'étendant de manière diamétrale à partir de l'extrémité du corps (11) faisant face au couvercle (14), ladite partie de pont (24) ayant un trou central (25) dans lequel les dents d'arrêt (26) peuvent être mises en prise.

5. Dispositif selon la revendication 1, du type dans lequel les moyens de mise en prise élastiques (15, 15a) de la douille (13) sont constitués par une pluralité de membres (15) élastiquement déformables formant des protubérances (15a) radiales vers l'extérieur, **caractérisé en ce que** lesdites parties de came (21) sur la douille (13) s'étendent vers le haut à partir d'une paire de membres (15) diamétralement opposés.

6. Dispositif selon la revendication 5, **caractérisé en ce que** lesdits moyens de retenue (22) du couvercle (14) sont formés par un élément en forme de barre s'étendant de manière diamétrale et pouvant fonctionner pour agir simultanément avec ses deux extrémités sur une paire de parties de came (21).

7. Dispositif selon la revendication 5, **caractérisé en ce que** lesdits éléments de retenue (22) du couvercle (14) sont formés par une paire d'éléments en forme de demi disque agencés sur des côtés diamétralement opposés afin d'agir simultanément sur une paire de parties de came (21).

8. Dispositif selon l'une quelconque des revendications précédentes, **caractérisé en ce que** le couvercle (14) est prévu avec des moyens de préhension (23, 29) sur lesquels un opérateur peut agir afin de faire tourner le couvercle.
